# EUROPÄISCHE PATENTSCHRIFT

(11) **EP 1 037 418 B1**
(45) Veröffentlichungstag und Bekanntmachung des Hinweises auf die Patenterteilung: **10.01.2007**
(21) Anmeldenummer: 00105205.9
(22) Anmeldetag: 13.03.2000
(51) Int. Cl.: H04B 15/02, H02M 1/12, H02K 11/02

(54) **Elektroantrieb mit einem aus einem Wechselrichter gespeisten Drehstrommotor**
Electric drive mechanism with three-phase motor powered by a converter
Entraînement électrique avec moteur triphase alimenté par un convertisseur

(30) Priorität: 17.03.1999 DE 19911809
(43) Veröffentlichungstag der Anmeldung: 20.09.2000
(73) Patentinhaber: Diehl AKO Stiftung & Co. KG, 88239 Wangen (DE)
(72) Erfinder: Zeh, Stefan, 88239 Wangen (DE)
(74) Vertreter: Diehl Patentabteilung

(56) Entgegenhaltungen:
- EP-A- 0 371 427
- EP-A- 0 809 346
- DE-A- 3 439 894
- DE-A- 19 812 315
- PATENT ABSTRACTS OF JAPAN vol. 1998, no. 13, 30. November 1998 (1998-11-30) & JP 10 210649 A (TOYO ELECTRIC MFG CO LTD), 7. August 1998 (1998-08-07)
- PATENT ABSTRACTS OF JAPAN vol. 14, no. 190, 18. April 1990 (1990-04-18) & JP 02 036795 A (MITSUBISHI ELECTRIC CORP), 6. Februar 1990 (1990-02-06)
- PATENT ABSTRACTS OF JAPAN vol. 1997, no. 06, 30. Juni 1997 (1997-06-30) & JP 09 037593 A (MITSUBISHI ELECTRIC CORP.), 7. Februar 1997 (1997-02-07)

## Beschreibung

Die Erfindung betrifft einen Elektroantrieb, insbesondere für Haushaltsgeräte, mit einem aus einem Wechselrichter gespeisten bürstenlosen Drehstrommotor nach dem Oberbegriff von Anspruch 1.

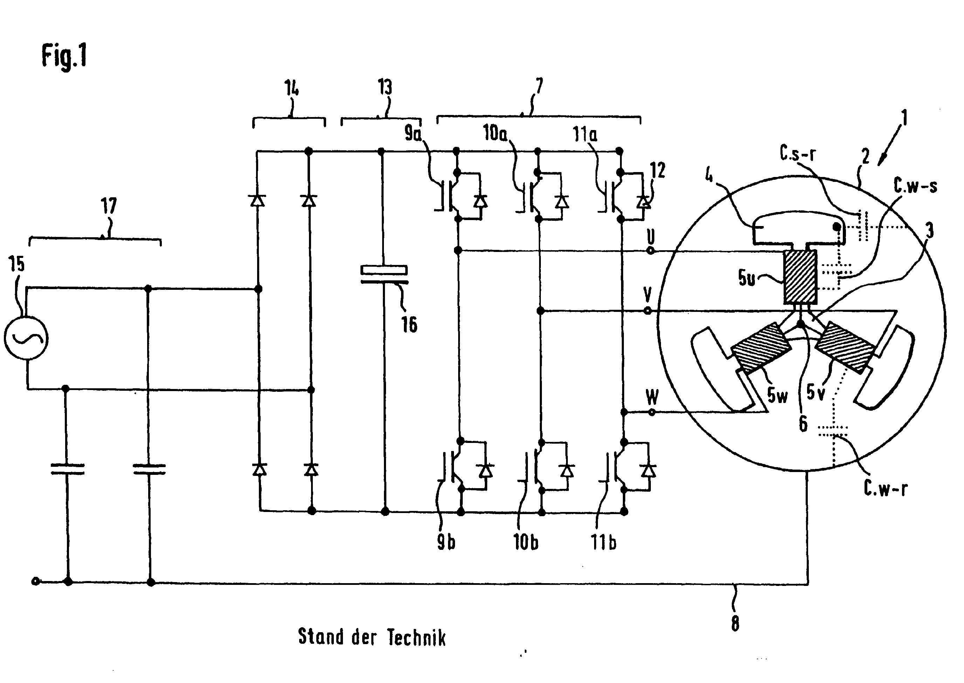

Die prinzipielle Schaltungsanordnung eines solchen Elektroantriebs ist schematisch in Fig. 1 dargestellt. Der Einfachheit halber sei hier der Fall eines Permanentmagnet-Synchronmotors beschrieben. Die Erkenntnisse lassen sich aber auch auf Käfigläufer-Asynchronmotoren oder andere bürstenlose Motoren anwenden. Als Oberbegriff wird hier der Begriff "Drehstrommotor" verwendet.
Der Drehstrommotor 1 weist einen Außenrotor 2 und einen innen liegenden Stator 3 auf, wobei der Stator 3 aus drei sternförmig angeordneten Polschuhen 4 aufgebaut ist. Die Polschuhe 4 des Stators 3 sind jeweils mit einer Erregerwicklung 5u, 5v, 5w versehen, wobei die Erregerwicklungen jeweils einerseits mit einem gemeinsamen Sternpunkt 6 und andererseits mit einer Anschlußklemme u, v, w des Drehstrommotors 1 verbunden sind. Der Rotor 2 ist vorzugsweise aus Metall und trägt im hier beschriebenen Fall einen Permanentmagneten, wobei die Drehachse des Rotors 2 mit der Symmetrieachse des Stators 2 zusammenfällt. Ferner ist der Rotor 2 des Drehstrommotors 1, der im Beispiel von Fig. 1 gleichzeitig das Motorgehäuse bildet, üblicherweise aus Sicherheitsgründen mit einem Schutzleiter 8 verbunden.

Die Schaltungsanordnung weist weiter einen Wechselrichter 7 auf, der aus drei jeweils in Reihe geschalteten Schalterpaaren 9a/b, 10a/b und 11a/b besteht. Die Anschlußklemmen u, v, w des Drehstrommotors 1 sind jeweils mit einem Verbindungspunkt zwischen zwei Schaltern von unterschiedlichen Schalterpaaren 9a/b, 10a/b und 11a/b verbunden. Die Schalter 9a/b, 10a/b, 11a/b des Wechselrichters 7 werden mittels einer nicht dargestellten Motorsteuerung hochfrequent gesteuert.

Der Wechselrichter 7 wird von einer Gleichstromquelle 13 gespeist. Als Gleichstromquelle 13 dient zumeist ein Zwischenkreis, der aus einer mittels eines Gleichrichters 14 gleichgerichteten Netz-Wechselspannung 15 gespeist wird. Zur Glättung der Zwischenkreisspannung wird außerdem ein Zwischenkreiskondensator 16 verwendet. Ferner ist ein Netzfilter 17 bestehend aus zwei Kapazitäten, die jeweils einen Pol der Netzspannung 15 mit dem Schutzleiter 8 verbinden, vorgesehen.

Aufgrund der gegenseitigen örtlichen Nähe der verschiedenen gegeneinander elektrisch isolierten Bauteile des Drehstrommotors 1 existieren unerwünschte parasitäre Kapazitäten C.w-s zwischen den Erregerwicklungen 5u, 5v, 5w und dem Stator 3 bzw. den jeweiligen Polschuhen 4, C.s-r zwischen dem Stator 3 und dem Rotor 2 sowie C.w-r zwischen den Erregerwicklungen 5 und dem Rotor 2. Aufgrund dieser parasitären Kapazitäten C.w-s, C.s-r und C.w-r fließen im Drehstrommotor 1 hochfrequente Wechselströme von den aus dem Wechselrichter 7 hochfrequent gespeisten Erregerwicklungen 5 auf den mit dem Rotor 2 elektrisch verbundenen Schutzleiter 8 ab. Diese sogenannten Ableitströme haben nachteilige Effekte auf die Motorlager und dürfen außerdem bei Haushaltsgeräten aufgrund des Personenschutzes (EN60335) einen bestimmten Grenzwert nicht überschreiten.

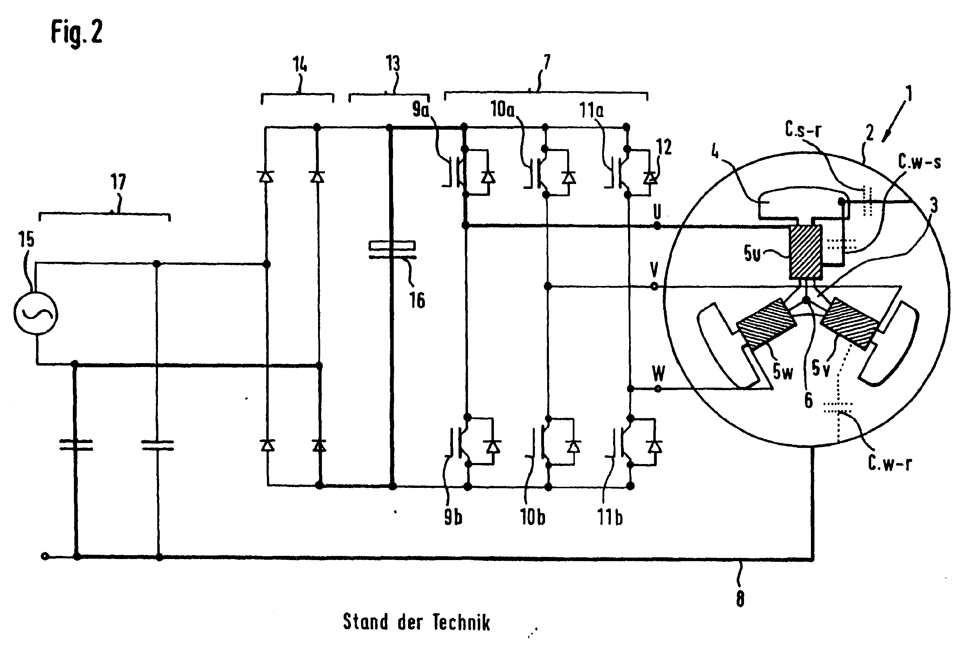

Zur Veranschaulichung ist in Fig. 2 ein bei vorbekannten Elektroantrieben möglicher Strompfad eines oben beschriebenen Ableitstromes als verstärkte Linie eingezeichnet. In dem gezeigten Beispiel fließt der über den Schalter 9a an der Anschlußklemme u des Drehstrommotors 1 der Erregerwicklung 5u zugeführte Strom über die beiden parasitären Kapazitäten C.w-s und C.s-r über den Rotor 2 auf den Schutzleiter 8 ab. Der Stromkreis wird letztlich durch den Netzfilter 17, den Gleichrichter 14 und den Zwischenkreis 13 in der gezeigten Weise geschlossen.

Bei dem Elektroantrieb von Fig. 1 besteht eine zusätzliche Gefahr, wenn kein Schutzleiter vorhanden ist und stattdessen die Kapazitäten des Netzfilters 17 mit Erde verbunden sind. In diesem Fall würde eine Bedienperson des Haushaltsgerätes, wie beispielsweise einer Waschmaschine, beim Berühren der Waschmaschinentrommel oder des Waschmaschinengehäuses und dem gleichzeitigen Berühren beispielsweise eines (geerdeten) Wasserhahnes den Stromkreis über die parasitären Kapazitäten und den Rotor schließen und die Gefahr eines Stromschlages bestehen.

Aus der DE 34 39 894 A1 ist es bekannt, den von den Statorwicklungen auf ein geerdetes Motorgehäuse abfließenden Ableitstrom zur Aufladung des Zwischenkreiskondensators zu benutzen und dazu das geerdete Motorgehäuse über Koppelkondensatoren mit dem Zwischenkreiskondensator und/oder den Polen des Gleichstromzwischenkreises zu verbinden. Eine Maßnahme zur Verhinderung des Abfließens dieser Ableitströme über das Motorgehäuse wird hier nicht getroffen.

Eine solche Maßnahme fehlt auch in der Lehre der EP 0 371 427 A2, nach welcher das Gehäuse eines Elektromotors für ein Schienenfahrzeug mit dem geerdeten Pol der Gleichspannungsquelle verbunden ist.

Die EP 0 809 346 A1 schlägt dagegen vor, den von den Statorwicklungen auf das geerdete Motorgehäuse abfließenden Ableitstrom einer Steuerschaltung zuzuleiten, welche auch mit den beiden Polen eines Gleichstromzwischenkreises verbunden ist.

Ausgehend von dem oben beschriebenen Stand der Technik ist es deshalb eine Aufgabe der vorliegenden Erfindung, bei Elektroantrieben mit aus einem Wechselrichter gespeisten Drehstrommotoren die auf den Schutzleiter abfließenden Ableitströme mit einfachen Mitteln zu vermeiden bzw. zu reduzieren.

Diese Aufgabe wird durch einen Elektroantrieb mit den Merkmalen des Anspruches 1 gelöst.

Erfindungsgemäß wird der vom Rotor elektrisch isolierte Stator bzw. werden die Polschuhe des Drehstrommotors mit einem Pol der Gleichspannungsquelle elektrisch leitend verbunden. Durch diese Maßnahme reduziert sich derjenige Wechselstrom, der über die Luftspaltkapazitäten von den Polschuhen bzw. dem Stator auf den Rotor und von diesem zum Schutzleiter fließt, deutlich gegenüber auf den Rotor und von diesem zum Schutzleiter fließt, deutlich gegenüber demjenigen bei der vorbekannten Schaltungsanordnung, da die Ableitströme aufgrund des geringeren elektrischen Widerstandes von den Polschuhen direkt zur Gleichspannungsquelle zurückfließen.

Um die Sicherheit des Elektroantriebes weiter zu erhöhen, wird die Verbindung des Stators mit dem Pol der Gleichspannungsquelle über eine vorzugsweise hochspannungsfeste Kapazität realisiert, da im Falle der direkten elektrischen Verbindung der Stator direkt mit der Hochspannung der Gleichspannungsquelle verbunden wäre.

Weitere vorteilhafte Ausgestaltungen und Weiterbildungen sind Gegenstand weiterer Unteransprüche.

Im folgenden wird ein bevorzugtes Ausführungsbeispiel der Erfindung anhand der beiliegenden Zeichnung näher erläutert. Darin zeigen:
- Fig. 1: die prinzipielle Schaltungsanordnung eines Elektroantriebes nach dem Stand der Technik;
- Fig. 2: die Schaltungsanordnung von Fig. 1 mit einem darin eingezeichneten Strompfad eines unerwünschten Ableitstromes;
- Fig. 3: die prinzipielle Schaltungsanordnung eines Elektroantriebes gemäß der vorliegenden Erfindung; und
- Fig. 4: die erfindungsgemäße Schaltungsanordnung von Fig. 3 mit einem darin eingezeichneten Strompfad eines Ableitstromes.

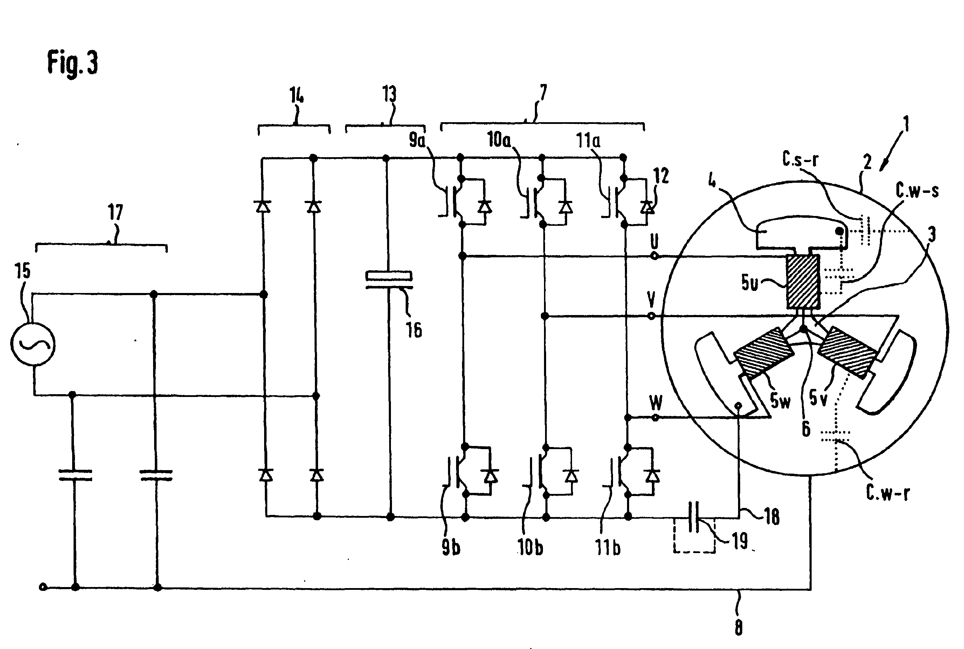

In Fig. 3 ist ein bevorzugtes Ausführungsbeispiel eines Elektroantriebes mit einem aus einem Wechselrichter gespeisten Drehstrommotor dargestellt. Elektroantriebe dieser Art werden beispielsweise in Haushaltsgeräten, wie Waschmaschinen, eingesetzt.

Die Schaltungsanordnung des in Fig. 3 gezeigten Elektroantriebes entspricht im wesentlichen derjenigen eines herkömmlichen Elektroantriebes, wie er oben anhand von Fig. 1 beschrieben ist. Bei dem Ausführungsbeispiel von Fig. 3 handelt es sich um einen Elektroantrieb mit einem dreisträngigen, sechspulsigen Drehstrommotor mit Permanenterregung. Es sei an dieser Stelle aber ausdrücklich darauf hingewiesen, daß die vorliegende Erfindung grundsätzlich bei allen Arten von Mehrphasen-Motoren einsetzbar ist.

Der Drehstrommotor 1 des Ausführungsbeispieles von Fig. 3 ist ein Drehstrommotor 1 mit einem Außenrotor 2, der im vorliegenden Fall zugleich das zum Beispiel mit der Waschtrommel einer Waschmaschine verbundene oder gekoppelte Motorgehäuse bildet, und einem innen liegenden Stator 3. Der Stator 3 weist beispielhaft drei sternförmig angeordnete Polschuhe 4 auf, die jeweils mit einer Erregerwicklung 5u, 5v, 5w versehen sind. Die Polschuhe 4 mit Erregerwicklungen 5 bilden in bekannter Weise Elektromagneten. Die Erregerwicklungen 5 sind jeweils einerseits mit einem gemeinsamen Sternpunkt 6 und andererseits mit einer Anschlußklemme u, v, w des Drehstrommotors 1 elektrisch leitend verbunden sind.

Der Rotor 2 ist vorzugsweise aus Metall und trägt einen Permanentmagneten, wobei die Drehachse des Rotors 2 mit der Symmetrieachse des Stators 3 bzw. der Polschuhanordnung 4 zusammenfällt. Ferner ist der Rotor 2 des Drehstrommotors 1 aus Sicherheitsgründen mit einem Schutzleiter 8 verbunden.

Die Ansteuerung des Drehstrommotors 1 erfolgt über die Anschlußklemmen u, v, w. Hierzu sind die Anschlußklemmen u, v, w des Drehstrommotors 1 an einen Wechselrichter 7 angeschlossen. Dieser Wechselrichter 7 besteht im vorliegenden Ausführungsbeispiel aus drei jeweils in Reihe geschalteten Schalterpaaren 9a/b, 10a/b und 11a/b. Die Anschlußklemmen u, v, w sind jeweils mit einem Verbindungspunkt zwischen zwei Schaltern von unterschiedlichen Schalterpaaren 9a/b, 10a/b und 11a/b verbunden. Als Schalter 9a/b, 10a/b, 11a/b werden vorzugsweise Leistungstransistoren verwendet, wobei zu den Schaltern 9a/b, 10a/b, 11a/b jeweils in an sich bekannter Weise eine Freilaufdiode 12 mit entgegengesetzter Durchlaßrichtung parallel geschaltet ist. Die Leistungstransistoren 9a/b, 10a/b, 11 a/b des Wechselrichters 7 werden mittels einer nicht dargestellten Motorsteuerung hochfrequent gesteuert. Die Frequenz beträgt zum Beispiel bei Waschmaschinen einige hundert Hz. Die Ansteuerung des Wechselrichters 7 ist bereits Gegenstand verschiedener Schutzrechte und soll an dieser Stelle nicht näher ausgeführt werden, da die erfindungsgemäße Schaltungsanordnung des Elektroantriebes unabhängig von der Ansteuerung der Schalter 9a/b, 10a/b, 11a/b ist und in Verbindung mit beliebigen Ansteuerungen eingesetzt werden kann.

Der Wechselrichter 7 wird von einer Gleichstromquelle 13 gespeist. Insbesondere im Fall von Haushaltsgeräten wird die Gleichstromquelle 13 vorteilhafterweise als Zwischenkreis realisiert, der aus einer mittels eines Gleichrichters 14 gleichgerichteten Netz-Wechselspannung 15 gespeist wird, da in Haushalten im allgemeinen nur Netz-Wechselspannungsquellen 15 aber keine Gleichspannungsquellenen zur Verfügung stehen. Zur Glättung der Zwischenkreisspannung wird außerdem ein Zwischenkreiskondensator 16 eingesetzt. Ferner ist ein Netzfilter 17 bestehend aus zwei Kapazitäten, die jeweils einen Pol der Netzspannung 15 mit dem Schutzleiter 8 verbinden, vorgesehen. Der Aufbau von Gleichrichter 14 und Netzfilter 17 ist bereits aus dem Stand der Technik bekannt und für den Fachmann aus Fig. 3 ersichtlich und soll deshalb hier nicht weiter erläutert werden.

Aufgrund der gegenseitigen örtlichen Nähe der verschiedenen gegeneinander elektrisch isolierten Bauteile des Drehstrommotors 1 existieren - wie auch bei herkömmlichen Elektroantrieben - unerwünschte bzw. parasitäre Kapazitäten. Insbesondere weist der Drehstrommotor 1 Kapazitäten C.w-s zwischen den Erregerwicklungen 5u, 5v, 5w und dem Stator 3 bzw. den jeweiligen Polschuhen 4, C.s-r zwischen dem Stator 3 und dem Rotor 2 sowie C.w-r zwischen den Erregerwicklungen 5 und dem Rotor 2 auf, von denen beispielhaft jeweils nur eine in Form einer gestrichelten Linie in Fig. 3 dargestellt ist.

Um zu vermeiden, daß unerwünschte Wechselströme von den Erregerwicklungen 5 über den Rotor 2 auf den Schutzleiter 8 abfließen, bzw. um diese Ableitströme zumindest merklich zu reduzieren, ist der innen liegende Stator 3 über eine elektrische Verbindung 18 mit einem Pol der Gleichspannungsquelle bzw. des Zwischenkreises 13 elektrisch leitend verbunden. Hierbei ist es von Vorteil, wenn der Stator 3 über eine Kapazität 19 mit dem Pol der Gleichspannungsquelle 13 verbunden ist, um zu verhindern, daß der Stator 3 direkt mit der Hochspannung des Zwischenkreises 13 verbunden ist. Hierzu sollte es sich bei der Kapazität 19 um eine entsprechend hochspannungsfeste Kapazität handeln.

Bei den genannten hochfrequenten Wechselströmen handelt es sich um Ströme, die insbesondere aufgrund der hochfrequenten Ansteuerung des Wechselrichters 7 von einigen tausend Hz über die Kapazitäten abfließen können. Da der Wechselstrom-Widerstand einer Kapazität umgekehrt proportional zur Kapazität und zur Frequenz der anliegenden Wechselspannung ist, ist der Stromfluß durch die Kapazität bei hochfrequenter Wechselspannung entsprechend größer bzw. überhaupt erst vorhanden.

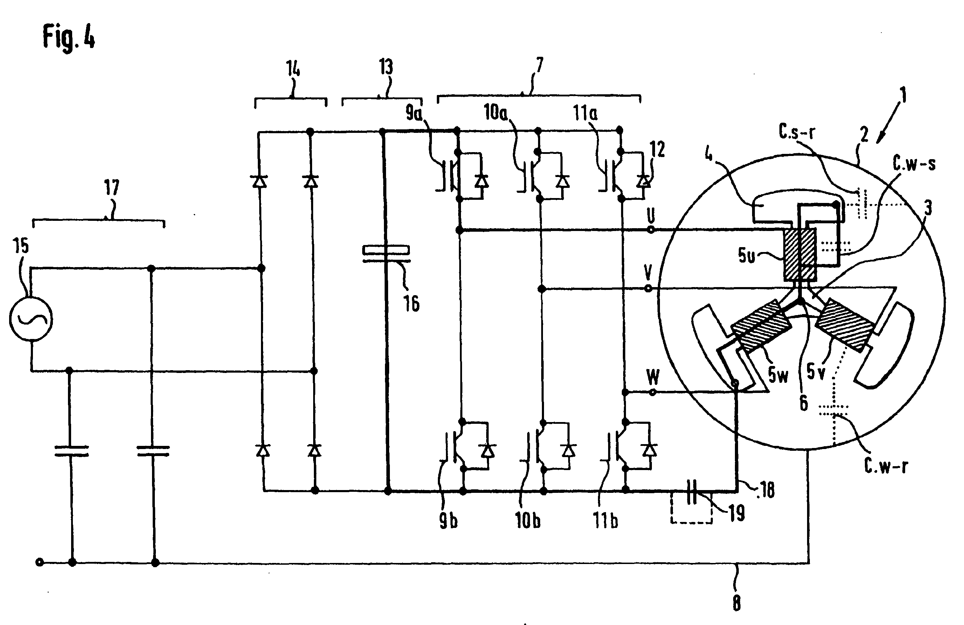

In Fig. 4 ist nun beispielhaft ein möglicher Strompfad der Ableitströme für die Schaltungsanordnung von Fig. 3 dargestellt (fett eingezeichnete Linie). Im Gegensatz zu der herkömmlichen Schaltungsanordnung von Fig. 1 fließen nun die hochfrequenten Wechselströme nicht über die Kapazitäten C.w-s und C.s-r und den Rotor 2 auf den Schutzleiter 8 ab (siehe Fig. 2), sondern fließen aufgrund des geringeren elektrischen Widerstandes vollständig oder zumindet zu einem größeren Teil über die elektrische Verbindung 18 direkt zum Zwischenkreis 13 ab.

Durch diese Maßnahme werden zum einen die Motorlager geschont und zum anderen auch die Grenzwerte für Ableitströme über das Motorgehäuse sicher eingehalten, die aufgrund des Personenschutzes zum Beispiel bei Haushaltsgeräten nicht überschritten werden dürfen.

Abschließend sei noch erwähnt, daß die vorliegende Erfindung prinzipiell nicht nur bei Drehstrommotoren mit Außenrotor und innen liegendem Stator angewendet werden kann, wie er in den Fig. 1 und 3 dargestellt ist. Es ist ebenso denkbar, für bestimmte Anwendungen Drehstrommotoren mit einem Außenstator und einem innen liegenden Rotor zu verwenden. In einem solchen Fall wird der Außenstator elektrisch Isoliert vom Motorgehäuse aufgebaut und mit einem Pol der Gleichspannungsquelle elektisch leitend verbunden. Der Rotor ist meist systembedingt mit dem Schutzleiter verbunden.

## Patentansprüche

1. Elektroantrieb, insbesondere für Haushaltsgeräte, mit
einem bürstenlosen Drehstrommotor (1), der einen Rotor (2) und einen Stator (3, 4) mit Erregerwicklungen (5) aufweist, und mit
einem an eine Gleichspannungsquelle (13) anzuschließenden mehrphasigen Wechselrichter (7), der mehrere Paare von in Reihe geschalteten Schaltern (9-11) aufweist,
wobei die Erregerwicklungen (5) jeweils mit einem Verbindungspunkt zwischen den Schaltern (9-11) unterschiedlicher Schalterpaare verbunden sind,
**dadurch gekennzeichnet,**
**dass** der vom Rotor (2) elektrisch isolierte Stator (3,4) mit einem Pol der Gleichspannungsquelle (13) elektrisch leitend verbunden ist.

2. Elektroantrieb nach Anspruch 1,
**dadurch gekennzeichnet,**
**dass** der Stator (3,4) mit dem Pol der Gleichspannungsquelle (13) über eine Kapazität (19) verbunden ist.

3. Elektroantrieb nach einem der vorhergehenden Ansprüche,
**dadurch gekennzeichnet,**
**dass** die Gleichspannungsquelle (13) ein aus einer gleichgerichteten Wechselspannungsquelle (15) gespeister Zwischenkreis ist.

4. Elektroantrieb nach einem der vorhergehenden Ansprüche,
**dadurch gekennzeichnet,**
**dass** der Rotor (2) ein Außenrotor und der Stator (3,4) ein innen liegender Stator ist.

5. Elektroantrieb nach einem der vorhergehenden Ansprüche,
**dadurch gekennzeichnet,**
**dass** die Erregerwicklungen (5) mit einem gemeinsamen Sternpunkt (6) verbunden sind.

## Claims

1. Electric drive, in particular for domestic appliances, having
a brushless three-phase AC motor (1) which has a rotor (2) and a stator (3, 4) with field windings (5), and having
a polyphase inverter (7) which can be connected to a DC voltage source (13) and has a plurality of pairs of switches (9-11) which are connected in series,
with the field windings (5) each being connected to a junction point between the switches (9-11) of different pairs of switches,
**characterized**
**in that** the stator (3, 4) which is electrically insulated from the rotor (2) is electrically conductively connected to one pole of the DC voltage source (13).

2. Electric drive according to Claim 1,
**characterized**
**in that** the stator (3, 4) is connected to the pole of the DC voltage source (13) via a capacitance (19).

3. Electric drive according to either of the preceding claims,
**characterized**
**in that** the DC voltage source (13) is an intermediate circuit which is supplied with power by a rectified AC voltage source (15).

4. Electric drive according to one of the preceding claims,
**characterized**
**in that** the rotor (2) is an external rotor and the stator (3, 4) is an internal stator.

5. Electric drive according to one of the preceding claims,
**characterized**
**in that** the field windings (5) are connected to a common star point (6).

## Revendications

1. Mécanisme d'entraînement électrique, notamment pour appareils domestiques, comprenant un moteur triphasé sans balais (1) qui présente un rotor (2) et un stator (3, 4) avec des enroulements excitateurs (5), et comprenant un onduleur (7) à plusieurs phases à raccorder à une source de tension continue (13), lequel présente plusieurs paires de commutateurs (9-11) branchés en série, les enroulements excitateurs (5) étant reliés à chaque fois avec un point de liaison entre les commutateurs (9-11) des paires de commutateurs différentes, **caractérisé en ce que** le stator (3, 4) isolé électriquement du rotor (2) est relié électriquement avec un pôle de la source de tension continue (13).

2. Mécanisme d'entraînement électrique selon la revendication 1, **caractérisé en ce que** le stator (3, 4) est relié avec le pôle de la source de tension continue (13) par le biais d'une capacité (19).

3. Mécanisme d'entraînement électrique selon l'une des revendications précédentes, **caractérisé en ce que** la source de tension continue (13) est un circuit intermédiaire alimenté depuis une source de tension alternative (15) redressée.

4. Mécanisme d'entraînement électrique selon l'une des revendications précédentes, **caractérisé en ce que** le rotor (2) est un rotor extérieur et le stator (3, 4) est un stator intérieur.

5. Mécanisme d'entraînement électrique selon l'une des revendications précédentes, **caractérisé en ce que** les enroulements excitateurs (5) sont reliés avec un point étoile (6) commun.
